# EUROPÄISCHE PATENTSCHRIFT

(11) **EP 1 667 339 B1**
(45) Veröffentlichungstag und Bekanntmachung des Hinweises auf die Patenterteilung: **09.04.2008**
(21) Anmeldenummer: 05021904.7
(22) Anmeldetag: 08.10.2005
(51) Int. Cl.: H04B 3/54

(54) **Home-Plug-Adapter**
Home-Plug-Adapter
Adaptateur pour prise pour courant alternatif

(30) Priorität: 03.12.2004 DE 102004058266
(43) Veröffentlichungstag der Anmeldung: 07.06.2006
(73) Patentinhaber: Devolo AG, 52070 Aachen (DE)
(72) Erfinder: Weling, Nico, 4701 Eupen (BE)
(74) Vertreter: Kohlmann, Kai

(56) Entgegenhaltungen:
- EP-A- 1 333 360
- EP-A- 1 343 253
- WO-A-02/05451

## Beschreibung

Die Erfindung betrifft einen Home-Plug-Adapter zur Vernetzung von Netzwerkhosts über ein Hausstromnetz mit einem Home-Plug-Chip sowie mindestens einer Netzwerkschnittstelle und einem zwischen den Home-Plug-Chip und den Netzstecker geschalteten Koppler zur Ein- und Auskopplung von Hochfrequenzsignalen in bzw. aus dem Hausstromnetz.

Neben den verbreiteten kabelgebundenen und kabellosen Netzwerktechnologien, wie Funknetzwerke, besteht die Möglichkeit der Heimvernetzung über vorhandene Stromleitungen im Haus. Diese Vernetzungstechnologie ist kostengünstig und komfortabel, da keine Kabel verlegt werden müssen und jede Steckdose als Anschluss an das Heimnetzwerk dienen kann. Die einzelnen Netzwerkgeräte werden über einen sogenannten Home-Plug-Adapter mit dem Hausstromnetz verbunden. Die über das Hausstromnetz zu übertragenden Daten werden im Frequenzbereich von 4,3 bis 20,9 MHz auf die Stromleitung mit einer OFDM-Modulation (OFDM= Orthogonal Frequency Devision Multiplexing) aufmoduliert, so dass nur ein sehr kleiner Teil der Signalleistung an die Umgebung abgegeben wird. Der Stromzähler im Haus dient bei derartigen Stromleitungsnetzwerken als physikalische Barriere nach außen, da die Daten durch den Tiefpass-Filter sehr stark gedämpft werden. Zur Erhöhung der Sicherheit eines Stromleitungsnetzwerkes ist es jedoch empfehlenswert, zusätzlich eine Verschlüsselungstechnologie zu verwenden. Die Standards für die Vernetzung über das Hausstromnetz wurden von der "Home-Plug-Powerline Alliance" entwickelt. Der zum Zeitpunkt dieser Anmeldung gültige Home-Plug-Standard ergibt sich aus "Home-Plug-Powerline Alliance, Home-Plug 1.0.1 specification, 01. Dezember 2001".

Zum Anschluss von aktiven Netzwerkgeräten - sogenannten Netzwerkhosts- über das Hausstromnetz kommen beispielsweise die zum Stand der Technik gehörigen HomePlug-Adapter der Fa devolo AG, Aachen in Betracht. Verfügbar sind Home-Plug-Adapter mit Ethernet-Schnittstelle oder alternativ mit USB-Schnittstelle. Mit mehreren derartigen Home-Plug-Adaptern lässt sich beispielsweise durch Anschluss von Personalcomputern an die Schnittstellen ein hausinternes Computernetzwerk über das Hausstromnetz aufbauen. Die bekannten Home-Plug-Adapter erlauben die Integration von Netzwerksgeräten, die dem IEEE 802.3-Standard entsprechen. So kann beispielsweise durch den Anschluss eines Internetzugangsgerätes, beispielsweise eines Modem-Routers an einen der Home-Plug-Adapter, die Stromleitung als Internet-Verlängerung in andere Räume genutzt werden. Dabei erfolgt der Internetzugang jedoch nicht aus der Steckdose, sondern über das Internetzugangsgerät, das in herkömmlicher Weise mit dem Internetzugang verbunden ist, beispielsweise mit einem DSL-, ISDN oder einem Telefonanschluss.

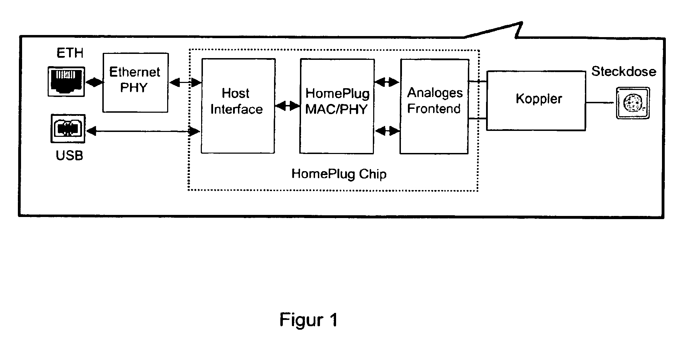

Nachfolgend wird ein bekannter Home-Plug-Adapter der Firma devolo AG anhand von Figur 1 beschreiben:

Die bekannten Home-Plug-Adapter weisen neben der Netzwerkschnittstelle einen Home-Plug-Chip und einen zwischen dem Home-Plug-Chip und dem Netzstecker des Home-Plug-Adapters geschalteten Koppler auf. Bei dem Koppler handelt es sich um einen Kopplungs-Transformator zur Ein- und Auskopplung der Hochfrequenzsignale in bzw. aus dem Hausstromnetz. Bei dem HomePlug-Chip handelt es sich um eine spezielle integrierte Schaltung, die die Funktion des derzeit gültigen Home-Plug-Standards 1.0.1 realisiert. Der Home-Plug-Chip gliedert sich in ein analoges, mit dem Koppler verbundenes Frontend, das die Funktion eines Bandpass-Filters, eines Digital/Analog- und Analog/Digitalwandlers sowie eines Verstärkers umfasst. Die Zugangssteuerung der Netzwerksgeräte im Hausstromnetz bewirkt der Home-Plug MAC/PHY (PHY = Physical Layer /MAC = Media Access Control). Ferner ist in dem Home-Plug-Chip ein Host Interface integriert, das die Kommunikation mit dem Ethernet-PHY bzw. der USB-Schnittstelle steuert. Bei dem Ethernet-PHY handelt es sich um ein physikalisches Interface für die Ethernet-Schnittstelle. In das physikalische Interface ist die DSP (Digitaler Signal Prozessor) basierte, physikalische Übertragungstechnik nach IEEE 802.3/802.3u implementiert. Das physikalische Interface unterstützt die MII (Media Independent Interface) Schnittstelle zur Kommunikation mit dem Home-Plug-Chip. An das physikalische Interface ist die RJ 45-Buchse angeschlossen.

Sobald der bekannte Home-Plug-Adapter über das Hausstromnetz mit Spannung versorgt wird, wird der Home-Plug-Chip dauerhaft aktiviert. Der Home-Plug-Adapter weist daher eine kontinuierliche Leistungsaufnahme am 230 Volt-Stromnetz von etwa 3,3 Watt auf. Hieraus resultiert eine stetige Erwärmung des Home-Plug-Adapters, die die Lebensdauer herabsetzen kann. Darüber hinaus verursacht die kontinuierliche Leistungsaufnahme auch dann Stromkosten, wenn der Netzwerkzugang über den HomePlug-Adapter nicht genutzt wird. Dies ist beispielsweise dann der Fall, wenn der an der Ethernet- oder USB-Schnittstelle angeschlossene Netzwerkhost, beispielsweise der Personalcomputer, abgeschaltet ist.

Aus der EP 1 333 360 A2 ist ein elektrischer Apparat, insbesondere ein Broadcast Data Receiver mit einer USB-Schnittstelle zum Anschluss von USB-Geräten, wie beispielsweise Druckern oder Kameras bekannt. Der elektrische Apparat weist Mittel auf, die an der USB-Schnittstelle angeschlossene USB-Geräte erkennen, ohne dass die Notwendigkeit besteht, die USB-Schnittstelle kontinuierlich mit Strom zu versorgen. Die Erkennungsmittel umfassen einen Stromversorgungs-Schaltkreis mit wenigstens einem Widerstand, der überwacht wird. Ändert sich der Zustand des Widerstands zeigt dies an, dass ein USB-Gerät an der USB-Schnittstelle des elektrischen Apparates angeschlossen ist und die Stromversorgung der Schnittstelle wird gestartet.

Aus der US 2002/0111076 A1 ist eine Steckdosenleiste für die Versorgung von Peripheriegeräten mit Netzspannung bekannt, die eine Datenübertragungs-Schnittstelle aufweist. Über die Datenübertragungs-Schnittstelle werden die Steckdosen der Steckdosenleiste von einem Personal-Computer ein- und ausgeschaltet. Die Peripheriegeräte des Personal-Computers, wie beispielsweise ein Monitor, ein Scanner und eine Drucker, werden mit der Netzspannung verbunden, wenn der Personal-Computer eingeschaltet ist und an seiner mit der Datenübertragungs-Schnittstelle der Steckdosenleiste verbundenen USB-Schnittstelle eine Spannung anliegt. Wird der Personal-Computer ausgeschaltet, wird die Netzspannungsversorgung der Steckdosenleiste unterbrochen.

Aus der EP-A-1 343 253 ist ein Home-Plug Modem bekannt, das einen Modemhauptteil umfasst, der über ein Kabel mit einem Stromversorgungsteil zur Stromversorgung des Modemhauptteils mit Gleichstrom und einen Gleichrichter verbunden ist. Das Kabel enthält Leitungen für die Stromversorgung des Modemhauptteils und die Datenübertragung. Der Modemhauptteil weist Schnittstellen zum Anschluss eines Personal-Computers auf, dessen digitale Daten im Modemhauptteil in analoge Daten gewandelt werden und umgekehrt. Die analogen Daten werden über einen an dem Stromversorgungsteil fest angeordneten Stecker über eine Steckdose des Hausstromnetzes übertragen. Der Stromversorgungsteil weist eine mit den Steckern verbundene, in den Stromversorgungsteil integrierte Steckdose auf, and die der Personal-Computer angeschlossen wird, wenn keine weitere freie Steckdose zur Verfügung steht.

Ferner ist aus der WO/05451 A ein Home-Plug - Adapter mit Stromdurchleitung bekannt, um die von ihm benötigte Steckdose weiterhin verfügbar zu machen. Der Home-Plug - Adapter weist Anschlüsse für einen Personalcomputer auf, dessen Daten von einem elektronischen Schaltkreis moduliert und über die Steckkontakte des Home-Plug-Adapters in das Stromnetz eingekoppelt werden. Der elektronische Schaltkreis kann auch Daten aus dem Stromnetz demodulieren und an die Anschlüsse für den Personal-Computer übertragen.

Ausgehend von diesem Stand der Technik liegt der Erfindung die Aufgabe zugrunde, ein Home-PlugHome-Plug-Adapter der eingangs erwähnten Art zu schaffen, dessen Lebensdauer durch eine stetige Erwärmung nicht verkürzt wird und der darüber hinaus geringere Energiekosten verursacht.

Die Lösung dieser Aufgabe basiert auf dem Gedanken, die Aktivierung des Home-PlugHome-Plug-Chips zeitweilig zu unterbinden.

Im einzelnen wird die Aufgabe bei einem Home-PlugHome-Plug-Adapter der eingangs erwähnten Art dadurch gelöst, dass der Home-PlugHome-Plug-Adapter einen mit jeder Netzwerkschnittstelle verbundenen Logikbaustein aufweist, der die von jeder Netzwerkschnittstelle eingehenden Signale auswertet und dass der Logikbaustein ein Steuersignal zum Abschalten des Home-PlugHome-Plug-Chips in Abhängigkeit vom logischen Zustand des von jeder Netzwerkschnittstelle eingehenden Signals generiert.

Die Erfindung macht sich die Tatsache zu Nutze, dass die an den Home-PlugHome-Plug-Adapter angeschlossenen Netzwerkhosts auswertbare Signale generieren, die an der Netzwerkschnittstelle anliegen. In dem der Home-PlugHome-Plug-Adapter einen mit jeder Netzwerkschnittstelle verbundene Logikbaustein aufweist, lässt sich feststellen, ob an der Netzwerkschnittstelle ein eingeschalteter oder ausgeschalteter Netzwerkhost angeschlossen ist. Abhängig von dieser Information generiert der Logikbaustein ein Steuersignal zum zeitweiligen Abschalten des Home-PlugHome-Plug-Chips in Abhängigkeit vom logischen Zustand des an der Netzwerkschnittstelle abgefragten Signals.

Der erfindungsgemäße Home-PlugHome-Plug-Adapter unterscheidet sich von den herkömmlichen Home-PlugHome-Plug-Adaptern durch den Logikbaustein. Der Logikbaustein wertet die von den Netzwerkhosts eingehenden Signale der Netzwerkschnittstellen aus und steuert den Home-PlugHome-Plug-Chip. Abhängig von dem logischen Zustand der Netzwerkschnittstelle entscheidet der Logikbaustein, ob der Home-PlugHome-Plug-Chip aktiviert oder abgeschaltet wird. Bei aktiviertem Home-PlugHome-Plug-Chip befindet sich der Home-PlugHome-Plug-Adapter im Betriebsmodus, während er sich bei abgeschaltetem Home-PlugHome-Plug-Chip in einem Energiesparmodus befindet. Lediglich bei aktiviertem Home-PlugHome-Plug-Chip weist der Home-PlugHome-Plug-Adapter die eingangs erwähnte Leistungsaufnahme von etwa 3,3 Watt auf, während im Energiesparmodus diese Leistungsaufnahme deutlich reduziert wird. Hieraus resultiert der Vorteil, dass die Betriebstemperatur des Home-PlugHome-Plug-Adapters während des Energiesparmodus absinkt, was sich insbesondere bei geringer Nutzungsintensität des Home-PlugHome-Plug-Adapters positiv auf dessen Lebensdauer auswirken kann. Der geringere Stromverbrauch hat darüber hinaus günstigere Betriebskosten des Home-PlugHome-Plug-Adapters zur Folge.

Eine Ethernet-Schnittstelle des erfindungsgemäßen Home-PlugHome-Plug-Adapters ist in an sich bekannter Weise über ein physikalisches Interface mit dem Home-PlugHome-Plug-Chip verbunden. Die Funktionsweise des physikalischen Interfaces wurde eingangs erläutert. Der Logikbaustein wertet bei vorhandener Ethernet-Schnittstelle das Ethernet Link Signal aus, dass das physikalische Interface erzeugt, wenn an der Ethernet-Schnittstelle ein aktiver Netzwerkhost angeschlossen ist. Ein solcher Netzwerkhost ist beispielsweise ein Personalcomputer oder ein Internet-Zugangsgerät.

Ist die Netzwerkschnittstelle des erfindungsgemäßen Home-PlugHome-Plug-Adapters indes als USB-Schnittstelle ausgestaltet, wertet der Logikbaustein die Versorgungsspannung der USB-Schnittstelle aus. Dort ist das USB-Power Signal vorhanden, wenn an der USB-Schnittstelle ein aktiver Netzwerkhost angeschlossen ist. In diesem Fall nutzt der Logikbaustein als Information die Versorgungsspannung, die an der USB-Schnittstelle eines aktiven Netzwerkhosts standardmäßig anliegt.

In einer Ausgestaltung der Erfindung ist der Home-PlugHome-Plug-Adapter mit mehreren gleichen oder verschiedenen Netzwerkschnittstellen ausgestattet. Der Logikbaustein ist in der Lage, mehrere gleiche oder unterschiedliche Netzwerkschnittstellen auszuwerten. Wenn an einer der Schnittstellen ein eingeschalteter Netzwerkhost angeschlossen ist, generiert der Logikbaustein kein Steuersignal zum Abschalten des Home-PlugHome-Plug-Chips. Das Steuersignal zum Abschalten wird lediglich dann generiert, wenn an keiner der Schnittstellen eines Home-PlugHome-Plug-Adapters ein eingeschalteter Netzwerkhost angeschlossen ist.

Nachfolgend wird die Erfindung anhand der Figuren näher erläutert. Es zeigen
- Figur 1: eine Darstellung eines zum Stand der Technik gehörigen Home-PlugHome-Plug-Adapters der Firma devolo AG;
- Figur 2: eine schematische vereinfachte Darstellung eines erfindungsgemäßen Home-PlugHome-Plug-Adapters;
- Figur 3: eine schematische vereinfachte Darstellung eines erfindungsgemäßen Home-PlugHome-Plug-Adapters mit Ethernet-Schnittstelle sowie
- Figur 4: eine vereinfachte schematische Darstellung eines erfindungsgemäßen Home-PlugHome-Plug-Adapters mit Ethernet und USB-Schnittstelle.

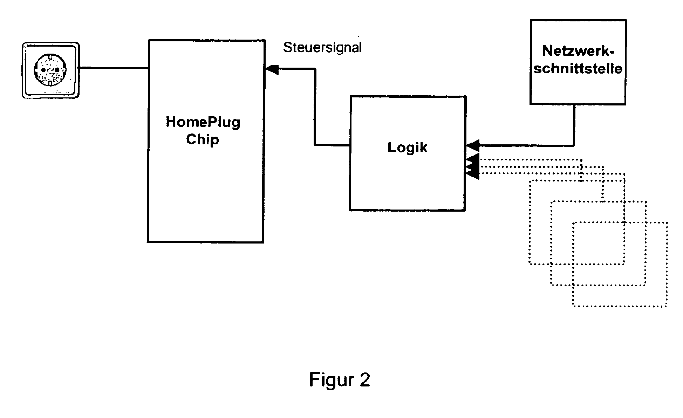

Die in den Figuren 2 bis 4 dargestellten Home-PlugHome-Plug-Adapter weisen übereinstimmend wie die aus dem Stand der Technik bekannten Home-PlugHome-Plug-Adapter einen Kopplungs-Transformator zwischen dem Home-PlugHome-Plug-Chip und der Steckdose auf, der jedoch der Übersichtlichkeit halber in den Figuren 2 bis 4 nicht dargestellt wurde. Der Home-PlugHome-Plug-Chip und soweit vorhanden das physikalische Interface für die Ethernet-Schnittstelle stimmt mit dem Home-PlugHome-Plug-Chip sowie dem physikalischen Interface des Home-PlugHome-Plug-Adapters nach dem Stand der Technik überein, so dass insoweit auf die Erläuterung zu Figur 1 Bezug genommen wird.

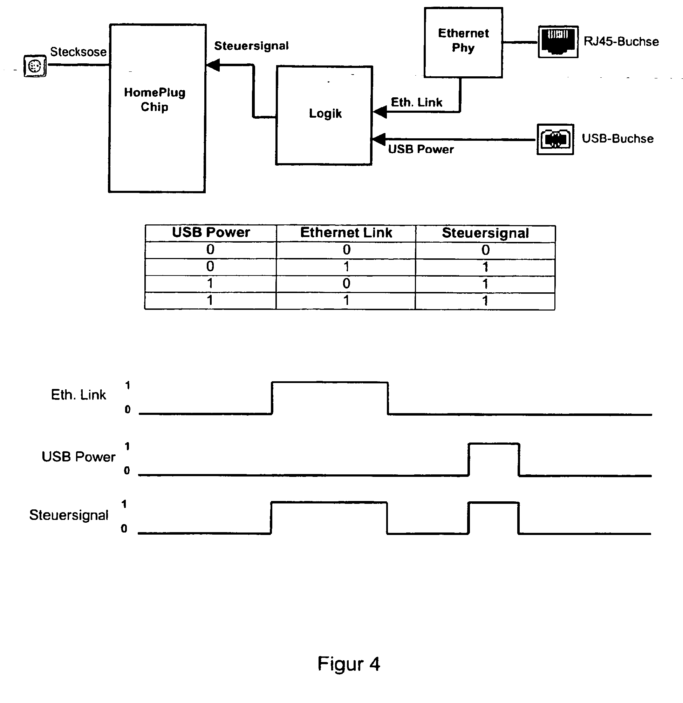

Aus Figur 2 ist ersichtlich, dass der erfindungsgemäße Home-PlugHome-Plug-Adapter zusätzlich einen mit Logik gekennzeichneten Logikbaustein aufweist, der zwischen die mindestens eine Netzwerkschnittstelle und den Home-PlugHome-Plug-Chip geschaltet ist. Der Logikbaustein wertet die von der Netzwerkschnittstelle eingehenden Signale aus und generiert in Abhängigkeit vom logischen Zustand des von jeder Netzwerkschnittstelle eingehenden Signals ein Steuersignal, das den Home-PlugHome-Plug-Chip aktiviert oder abschaltet. Die gepunktet dargestellten weiteren Netzwerkschnittstellen verdeutlichen, dass der Logikbaustein in der Lage ist, mehrere Schnittstellen auszuwerten. Der erfindungsgemäße Home-PlugHome-Plug-Adapter kann daher beispielsweise über eine Ethernet und eine USB-Schnittstelle verfügen (vgl. Figur 4).

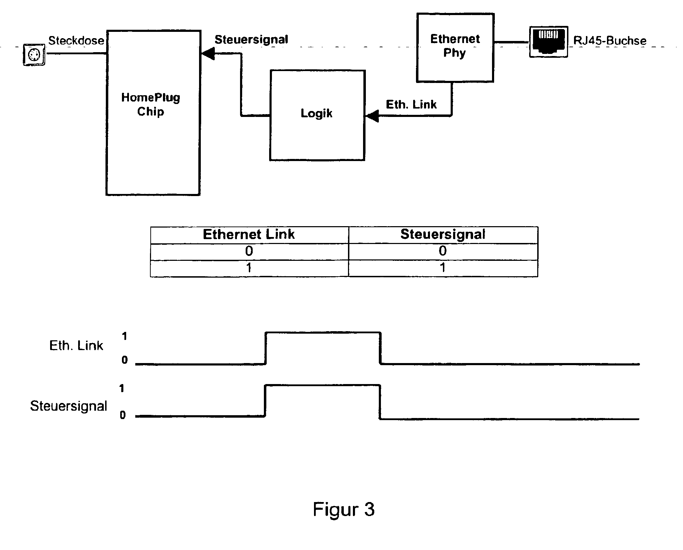

Anhand des in Figur 3 dargestellten Home-PlugHome-Plug-Adapters mit Ethernet-Schnittstelle wird nachfolgend die Auswertung der von der Ethernet-Schnittstelle eingehenden Signale näher erläutert. Der Logikbaustein wertet das Ethernet Link Signal (Eth. Link) aus. Das Ethernet Link Signal liegt an einem digitalen Ausgang des Chips (Ethernet PHY). an, der das physikalische Interface bildet Dieses Signal beinhaltet die Information, ob an der Ethernetanschlussbuchse (RJ45-Buchse) ein Netzwerkkabel eingesteckt ist, das mit einem aktiven Netzwerkhost, beispielsweise einem Personalcomputer verbunden ist. Ist eine Verbindung zu einem eingeschalteten Netzwerkhost vorhanden, ist das Ethernet Link Signal logisch "1". Ist kein aktiver Netzwerkhost vorhanden, ist das Ethernet Link Signal logisch "0" . Abhängig von dieser Information schaltet der Logikbaustein mit Hilfe des Steuersignals den Home-Plug-Chip ab, wenn das Ethernet Link Signal logisch "0" ist. Der Home-Plug-Adapter geht damit in den Energiesparmodus über. Aus dem unter dem Blockschaltbild dargestellten Signalverlauf ist erkennbar, dass sich bei dem gezeigten Ausführungsbeispiel das Steuersignal, das der Logikbaustein generiert, wie das Ethernet Link Signal verhält. Der Signalverlauf verdeutlicht, dass bei nicht vorhandenem Ethernet Link Signal der Home-Plug-Chip abgeschaltet wird, während bei vorhandenem Ethernet Link Signal der Home-Plug-Chip aktiviert wird.

Anhand des Blockschaltbildes nach Figur 4 wird ein erfindungsgemäßer Home-Plug-Adapter mit zwei NetzwerkSchnittstellen, nämlich einer Ethernet-Schnittstelle und einer USB-Schnittstelle näher erläutert. Der erfindungsgemäß vorgesehene Logikbaustein wertet nun abweichend zu dem Ausführungsbeispiel nach Figur 3 sowohl das von der USB-Schnittstelle als auch das von der Ethernet-Schnittstelle eingehende Signal aus. Bei dem von der Ethernet-Schnittstelle eingehende Signal handelt es sich um das Ethernet Link Signal an dem digitalen Ausgang des physikalischen Interfaces. Insoweit wird auf die Erläuterungen zu Figur 3 verwiesen. Bei dem von der USB-Schnittstelle eingehenden Signal handelt es sich um das USB Powersignal. Ist beispielsweise an der USB-Buchse der USB-Schnittstelle ein eingeschalteter Personalcomputer angeschlossen, liefert dessen USB-Bus standardmäßig eine Versorgungsspannung (USB-Power). Diese Versorgungsspannung liegt an der USB-Schnittstelle an und wird von dem Logikbaustein als logische "1" erkannt. Ist an der USB-Schnittstelle kein USB Kabel angeschlossen oder der angeschlossene Personalcomputer ausgeschaltet, liegt an der USB-Schnittstelle keine Versorgungsspannung an; dieser Zustand wird von dem Logikbaustein als logische "0" erkannt.

Hinsichtlich der Auswertung des Ethernet Link Signal, dass das physikalische Interface erzeugt, wird auf die Erläuterungen zu Figur 3 verwiesen.

Der unter dem Blockschaltbild in Figur 4 dargestellte Signalverlauf verdeutlicht, dass der Logikbaustein kein Steuersignal zum Abschalten des Home-Plug-Chips generiert, wenn an der Ethernet-Schnittstelle oder der USB-Schnittstelle ein eingeschalteter Netzwerkhost angeschlossen ist, das heißt, wenn entweder das Ethernet Link Signal oder das USB Power Signal logisch "1" ist.

Sind an beiden Schnittstellen des erfindungsgemäßen Home-Plug-Adapters eingeschaltete Netzwerkhosts angeschlossen, ist sowohl das Ethernet Link Signal als auch das USB Powersignal logisch "1". In diesem Fall erzeugt der Logikbaustein ebenfalls ein Steuersignal, das logisch "1" ist und aktiviert damit den Home-Plug-Chip.

## Patentansprüche

1. Home-Plug-Adapter zur Vernetzung von Netzwerkhosts über ein Hausstromnetz mit einem Home-Plug-Chip sowie mindestens einer Netzwerkschnittstelle und einem zwischen den Home-Plug-Chip und den Netzstecker geschalteten Koppler zur Ein- und Auskopplung von Hochfrequenzsignalen in bzw. aus dem Hausstromnetz, **dadurch gekennzeichnet,**
- **dass** der Home-Plug-Adapter einen mit jeder Netzwerkschnittstelle verbundenen Logikbaustein aufweist, der die von jeder Netzwerkschnittstelle eingehenden Signale auswertet und
- **dass** der Logikbaustein ein Steuersignal zum Abschalten des Home-Plug-Chips in Abhängigkeit vom logischen Zustand des von jeder Netzwerkschnittstelle eingehenden Signals generiert.

2. Home-Plug-Adapter nach Anspruch 1, **dadurch gekennzeichnet, dass** mindestens eine Netzwerkschnittstelle eine Ethernet-Schnittstelle ist, die über ein physikalisches Interface mit dem Home-Plug-Chip verbunden ist.

3. HomePlug-Adapter nach Anspruch 1 oder 2, **dadurch gekennzeichnet, dass** mindestens eine Netzwerkschnittstelle eine USB-Schnittstelle ist

4. HomePlug-Adapter nach Anspruch 2, **dadurch gekennzeichnet, dass** der Logikbaustein das Ethernet Link Signal auswertet, das das physikalischen Interface erzeugt, wenn an der Ethernet-Schnittstelle ein eingeschalteter Netzwerkhost angeschlossen ist.

5. Home-Plug-Adapter nach Anspruch 3, **dadurch gekennzeichnet, dass** der Logikbaustein die Versorgungsspannung der USB-Schnittstelle auswertet, wobei das USB-Power Signal vorhanden ist, wenn ein eingeschalteter Netzwerkhost an der USB-Schnittstelle angeschlossen ist.

6. Home-Plug-Adapter nach einem der Ansprüche 1 bis 5, **dadurch gekennzeichnet, dass** der Logikbaustein kein Steuersignal zum Abschalten des Home-Plug-Chips generiert, wenn an einer der Schnittstellen ein eingeschalteter Netzwerkhost angeschlossen ist.

## Claims

1. A HomePlug adapter for linking network hosts via a domestic power supply comprising a HomePlug chip and at least one network interface and a coupler connected between the HomePlug chip and the mains plug for coupling high-frequency signals into and out from the domestic power supply **characterised in**
- **that** the HomePlug adapter has a logic module connected to each network interface which evaluates incoming signals from each network interface and
- **that** the logic module generates a control signal for switching off the HomePlug chip depending on the logic state of the incoming signal from each network interface.

2. The HomePlug adapter according to claim 1, **characterised in that** at least one network interface is an Ethernet interface which is connected to the HomePlug chip via a physical interface.

3. The HomePlug adapter according to claim 1 or 2, **characterised in that** at least one network interface is a USB interface.

4. The HomePlug adapter according to claim 2, **characterised in that** the logic module evaluates the Ethernet link signal generated by the physical interface when a switched-on network host is connected to the Ethernet interface.

5. The HomePlug adapter according to claim 3, **characterised in that** the logic module evaluates the supply voltage of the USB interface, wherein the USB power signal is present when a switched-on network host is connected to the USB interface.

6. The HomePlug adapter according to any one of claims 1 to 5, **characterised in that** the logic module generates no control signal for switching off the HomePlug chip when a switched-on network host is connected to one of the interfaces.

## Revendications

1. Adaptateur réseau domestique pour la mise en réseau d'hôtes réseaux par l'intermédiaire d'un réseau électrique domestique, avec une puce réseau et avec au moins une interface réseau et un coupleur monté entre la puce réseau et la fiche secteur, pour l'injection et l'extraction de signaux haute fréquence dans le, respectivement hors du réseau électrique domestique, **caractérisé en ce que**
- l'adaptateur réseau domestique comporte un élément logique relié avec chaque interface réseau qui évalue des signaux entrants à partir de chaque interface réseau et
- l'élément logique génère un signal de commande pour la mise à l'arrêt de la puce réseau, en fonction de l'état logique du signal entrant à partir de chaque interface réseau.

2. Adaptateur réseau domestique selon la revendication 1, **caractérisé en ce qu'**au moins une interface réseau est une interface Ethernet, qui est reliée avec la puce réseau par l'intermédiaire d'une interface physique.

3. Adaptateur réseau domestique selon la revendication 1 ou 2, **caractérisé en ce qu'**au moins une interface réseau est une interface USB.

4. Adaptateur réseau domestique selon la revendication 2, **caractérisé en ce que** l'élément logique évalue le signal de liaison Ethernet, qui génère l'interface physique, lorsqu'un hôte réseau en marche est branché sur l'interface Ethernet.

5. Adaptateur réseau domestique selon la revendication 3, **caractérisé en ce que** l'élément logique évalue la tension d'alimentation de l'interface USB, le signal de puissance USB étant présent, si un hôte réseau en marche est branché sur l'interface USB.

6. Adaptateur réseau domestique selon l'une quelconque des revendications 1 à 5, **caractérisé en ce que** l'élément logique ne génère aucun signal pour la mise à l'arrêt de la puce réseau si un hôte réseau en marche est branché sur l'une des interfaces.
